# EUROPÄISCHE PATENTSCHRIFT

(11) **EP 1 504 665 B1**
(45) Veröffentlichungstag und Bekanntmachung des Hinweises auf die Patenterteilung: **06.09.2017**
(21) Anmeldenummer: 04016770.2
(22) Anmeldetag: 15.07.2004
(51) Int. Cl.: A21B 1/40, A47J 37/08, F24C 7/08

(54) **Bräunungssensorvorrichtung und Gargerät**
Browning sensor and cooking apparatus
Capteur de brunissement et appareil de cuisson

(30) Priorität: 06.08.2003 DE 10336113
(43) Veröffentlichungstag der Anmeldung: 09.02.2005
(73) Patentinhaber: BSH Hausgeräte GmbH, 81739 München (DE)
(72) Erfinder: Klemp, Eric, 83301 Traunreut (DE); Schnell, Wolfgang, 83308 Trostberg (DE); Zeraschi, Monika, 83301 Traunreut (DE)

(56) Entgegenhaltungen:
- WO-A-02/060302
- WO-A-03/011090
- DE-A- 2 125 423

## Beschreibung

Die Erfindung geht aus von einer Bräunungssensorvorrichtung nach dem Oberbegriff des Anspruchs 1.
Aus der EP 0 682 243 A1 ist eine gattungsbildende Bräunungssensorvorrichtung sowie ein Gargerät mit einer entsprechenden Bräunungssensorvorrichtung bekannt. Die Bräunungssensorvorrichtung umfasst eine Messstrahlen und Referenzstrahlen aussendende Sendeeinheit und eine die Messstrahlen und die Referenzstrahlen empfangende Empfängereinheit. Ferner umfasst die Bräunungssensorvorrichtung eine eine Schnittstelle zu einem Garraum bildende Koppeleinheit. Die Koppeleinheit ist von einem einzelnen, als Hohlspiegel ausgestalteten Koppelmittel gebildet, über das die Messstrahlen und die Referenzstrahlen in den Garraum direkt, d.h. ohne weitere Umlenkung durch ein Mittel der Bräunungssensorvorrichtung, eingekoppelt werden und über das an einem Gargut reflektierte Strahlung aus dem Garraum direkt, d.h. ohne vorherige Umlenkung durch ein Mittel der Bräunungssensorvorrichtung, ausgekoppelt wird.

Das Dokument DE2125423A offenbart die Merkmale der Präambel von Anspruch 1.

Die Aufgabe der Erfindung besteht insbesondere darin, eine gattungsgemäße Bräu-nungssensorvorrichtung bereitzustellen, bei der eine höhere Messgenauigkeit erreichbar ist. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.
Die Erfindung geht aus von einer Bräunungssensorvorrichtung zur Ermittlung eines Bräunungsgrads eines Garguts, die eine Sendeeinheit und eine Empfängereinheit sowie eine eine Schnittstelle zu einem Garraum bildende Koppeleinheit aufweist.
Es wird vorgeschlagen, dass die Koppeleinheit zumindest zwei Koppelmittel umfasst. Die Koppelmittel können flexibel, an die Anforderungen angepasst angeordnet und es können aus unerwünschten Intensitätsschwankungen resultierende Messfehler zumindest weitgehend vermieden und die Messgenauigkeit kann gesteigert werden. Ferner kann die Schmutzempfindlichkeit der Bräunungssensorvorrichtung reduziert werden, indem die Verschmutzung einzelner Koppelmittel in der Gesamtheit weniger ins Gewicht fällt.

Erfindungsgemäss wird weiters vorgeschlagen, dass einer Referenzstrahlung und einer Messstrahlung jeweils zumindest ein Koppelmittel zugeordnet ist, wodurch die Anordnung der Koppelmittel, insbesondere auf die Anforderungen der Referenzstrahlung bzw. der Messstrahlung, vorteilhaft angepasst werden können.

Unter einem Koppelmittel soll in diesem Zusammenhang ein Mittel verstanden werden, über das Strahlung in den Garraum im Wesentlichen direkt, d.h. im Wesentlichen ohne weitere Umlenkungen durch ein Mittel der Bräunungssensorvorrichtung, eingekoppelt und/oder über das Strahlung aus dem Garraum im Wesentlichen direkt, d.h. im Wesentlichen ohne eine vorherige Umlenkung durch ein Mittel der Bräunungssensorvorrichtung, aus dem Garraum ausgekoppelt werden kann. Es kann durch eine gezielte Anordnung von Koppelmitteln, über die Strahlung einkoppelbar ist, eine vorteilhaft gleichmäßige Ausleuchtung des Garraums erreicht und es kann durch eine gezielte Anordnung von Koppelmitteln, über die Strahlung auskoppelbar ist, eine vorteilhafte Detektion erzielt werden. Es kann insbesondere in den Koppelmitteln zugeordneten, eng begrenzten Bereichen eine vorteilhaft hohe Gleichmäßigkeit der Beleuchtung erzielt werden.
Die Koppelmittel können gruppiert, ungruppiert, beabstandet und/oder unbeabstandet an Boden, Decke und/oder Wänden des Garraums angeordnet sein. Grundsätzlich ist eine feste Anordnung der Koppelmittel im Garraum und/oder auch eine manuell von einem Bediener und/oder zumindest teilautomatisiert von einer Steuer-/Regeleinheit einstellbare Anordnung denkbar, die beispielsweise abhängig von einer über einen Sensor sensierten Einschubhöhe, einer sensierten Position eines Garguts auf einer Einschubhöhe und/oder einer gewählten Garart usw. zumindest einzelne Koppelmittel entsprechend anordnet und/oder aktiviert.
Der Begriff "Bräunungsgrad" wird nachfolgend allgemein derart verstanden, dass hierunter eine Veränderung der Oberflächenfärbung bzw. Oberflächeneigenschaften erfasst wird, die sich von anfangs ganz hellen bis später zu dunkleren Werten hin verändert. Eine weiße Fläche würde dabei einen Bräunungsgrad von 0 und eine schwarze Fläche würde dabei einen Bräunungsgrad von 1 aufweisen. Abhängig von der Art der Berechnung und gewünschten Darstellung kann der Messwert auch umgekehrt dargestellt werden, ebenso kann die Skala von 0 bis 100 reichen.
Unter Bräunungssensorvorrichtung soll in diesem Zusammenhang eine Vorrichtung verstanden werden, mittels der ein für die Bräunung des Garguts repräsentativer Wert ermittelt werden kann, und zwar insbesondere eine Vorrichtung zur Messung des Bräunungsgrads eines Garguts, insbesondere zur Messung des Bräunungsgrads eines Backguts, bei einer Wärmebehandlung in einem Garraum, mit mindestens einer Sendeeinheit, die eine Messstrahlung und eine Referenzstrahlung unterschiedlicher Wellenlängenbereiche erzeugt, die beide über eine Koppeleinheit auf das Gargut abgestrahlt werden, mit einem Messsensor zur Erfassung der vom Gargut reflektierten, rückgestreuten Strahlung, mit einem Referenzsensor zur Erfassung der Intensität der Messstrahlung und der Referenzstrahlung, und mit einer Einrichtung zur Ermittlung des Bräunungsgrads aus der vom Messsensor detektierten Intensität der Messstrahlung, aus der vom Messsensor detektierten Intensität der Referenzstrahlung, aus der vom Referenzsensor detektierten Intensität der Messstrahlung und aus der vom Referenzsensor detektierten Intensität der Referenzstrahlung, wie diese grundsätzlich in der Druckschrift EP 0 682 243 A1 beschrieben ist. Die Druckschrift EP 0 682 243 A1 soll in ihrem gesamten Umfang und insbesondere im Hinblick auf den Auswertealgorithmus zur Ermittlung des Bräunungsgrads als zur Lehre der vorliegenden Erfindung gehörig anzusehen sein.
Unter Gargerät sollen sämtliche Geräte verstanden werden, bei denen der Fachmann eine Anwendung der erfindungsgemäßen Lösung als sinnvoll erachtet, wie insbesondere Backöfen, Mikrowellenherde, Brotröster, Toaster usw. bzw. prinzipiell alle Geräte, die den Zustand des Garguts durch thermisches Einwirken verändern.

Ferner wird vorgeschlagen, dass die Sendeeinheit zumindest zwei jeweils eine Referenzstrahlung und/oder zumindest zwei jeweils eine Messstrahlung erzeugende Strahlungsquellen, insbesondere Lichtquellen, aufweist, denen insbesondere jeweils ein Koppelmittel zugeordnet ist, wodurch eine vorteilhaft hohe Flexibilität im Hinblick auf eine Intensitätsverteilung im Garraum erzielt werden kann.
Ist wenigstens ein Koppelmittel mit einem Strahlungsleiter, insbesondere einem Lichtwellenleiter, verbunden, können Strahlungsquellen und/oder Sensoren vorteilhaft beabstandet zum Garraum und insbesondere beabstandet zu Bereichen mit hohen Temperaturen angeordnet werden. Grundsätzlich wäre jedoch auch denkbar, mittels einer Strahlungsquelle direkt, d.h. ohne Strahlungsleiter, Strahlung über ein Koppelmittel in den Garraum einzukoppeln und/oder mittels eines Sensors direkt, d.h. ohne Strahlungsleiter, Strahlung über ein Koppelmittel auszukoppeln. Sind den Strahlungsleitern noch weitere Funktionen zugeordnet, wie beispielsweise die Strahlungsleitung von Licht einer herkömmlichen Garraumbeleuchtung, können zusätzliche Bauteile, Montageaufwand und Kosten eingespart werden.

In einer weiteren Ausgestaltung der Erfindung wird vorgeschlagen, dass wenigstens ein Koppelmittel zumindest teilweise von einer Linse gebildet ist, wodurch die Strahlungsverteilung gezielt beeinflusst und die Gleichmäßigkeit im Hinblick auf einen örtlich begrenzten Bereich verbessert werden kann. Ist die Linse zumindest teilweise einstückig mit dem Strahlungsleiter ausgeführt, können zusätzliche Bauteile, Bauraum, Montageaufwand und Kosten eingespart werden.

Die erfindungsgemäße Lösung eignet sich für sämtliche, dem Fachmann als sinnvoll erscheinende Gargeräte, jedoch besonders vorteilhaft für Haushaltsgargeräte, bei denen mittels der erfindungsgemäßen Lösung trotz zahlreich verschiedener Gargüter und unterschiedlicher Anordnungen derselben vorteilhafte Ergebnisse erreicht werden können.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

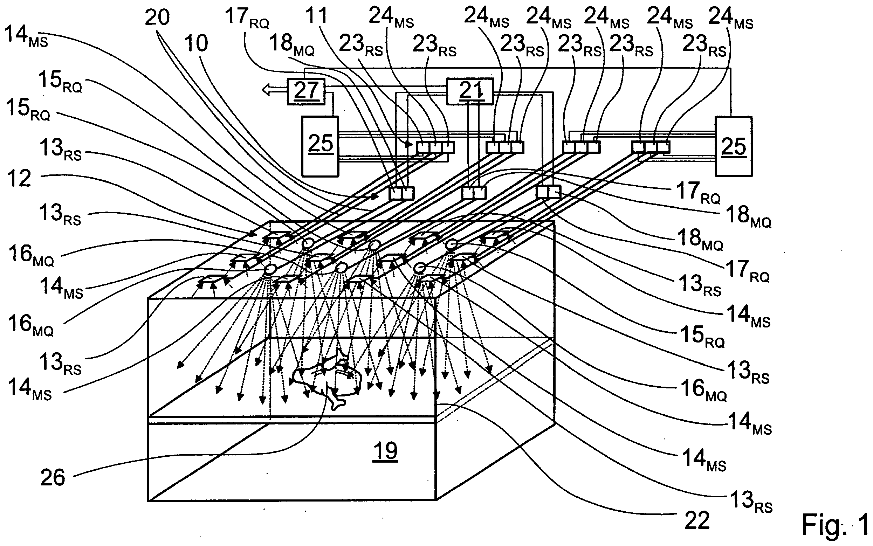

Fig. 1 zeigt einen schematisch dargestellten Haushaltsbackofen mit einer Bräunungssensorvorrichtung zur Ermittlung eines Bräunungsgrads eines Garguts 26. Die Bräunungssensorvorrichtung weist eine Sendeeinheit 10, eine Empfängereinheit 11 sowie eine eine Schnittstelle zu einem Garraum 19 bildende Koppeleinheit 12 auf.

Die Sendeeinheit 10 weist drei jeweils eine Referenzstrahlung erzeugende Strahlungsquellen 17_{RQ} und drei jeweils eine Messstrahlung erzeugende Strahlungsquellen 18_{RQ} auf. Jeder Strahlungsquelle 17_{RQ}, 18_{RQ} ist jeweils ein Koppelmittel 15_{RQ}, 16_{MQ} der Koppeleinheit 12 zugeordnet. Die Strahlungsquellen 17_{RQ}, 18_{RQ} sind beabstandet zu einer Deckseite einer den Garraum 19 begrenzenden Muffel 22, in einem zur Deckseite kühleren Bereich angeordnet und sind vorteilhaft jeweils über von Glasfaserbündeln gebildete Strahlungsleiter 20 bzw. Lichtleiter mit den in der Deckseite der Muffel 22 angeordneten und zueinander beabstandeten Koppelmitteln 15_{RQ}, 16_{MQ} verbunden. Die Koppelmittel 15_{RQ}, 16_{MQ} sind zur Erreichung einer gleichmäßigen Ausleuchtung des Garraums 19 von an die Strahlungsleiter 20 einstückig angeformten Linsen gebildet. Grundsätzlich wäre jedoch auch denkbar, dass Strahlungsleiter an handelsübliche Linsen angekoppelt sind oder dass die Strahlung direkt über Strahlungsleiter ohne angeformte Linsen in den Garraum 19 eingekoppelt wird. Die Referenzstrahlung und die Messstrahlung weisen Wellenlängen vorzugsweise deutlich unterhalb 600 nm vorzugsweise ca. 480 nm auf, wobei die Strahlungsquellen 17_{RQ,} 18_{RQ} zur Erzeugung der Strahlungen mit einer Treibereinheit 21 verbunden sind. Es können neben einer Strahlung mit nur einer Frequenz auch noch weitere Strahlungen mit weiteren Frequenzen vorgesehen sein. Die Referenzstrahlung kann insbesondere auch außerhalb des sichtbaren Bereichs liegen. Im Ausführungsbeispiel sind grundsätzlich im Wesentlichen gleiche Bauteile mit gleichen Bezugszeichen versehen.

Die Empfängereinheit 11 weist sechs von Photodioden gebildete und zueinander beabstandet angeordnete Referenzsensoren 23_{RS} und sechs von Photodioden gebildete und zueinander beabstandet angeordnete Messsensoren 24_{MS} auf. Jedem Sensor 23_{RS}, 24_{MS} ist jeweils ein Koppelmittel 13_{RS}, 14_{MS} zugeordnet. Die Sensoren 23_{RS}, 24_{MS} sind beabstandet zur Deckseite der Muffel 22, in einem zur Deckseite kühleren Bereich angeordnet und sind über von Glasfaserbündeln gebildete Strahlungsleiter 20 bzw. Lichtleiter mit den in der Deckseite der Muffel 22 angeordneten Koppelmitteln 13_{RS}, 14_{MS} verbunden. Die Sensoren 23_{RS}, 24_{MS} sind mit Verstärker- und Filtereinheiten 25 verbunden. Anstatt jeder Strahlungsquelle 17_{RQ}, 18_{RQ} und/oder jedem Sensor 23_{RS}, 24_{MS} einen Strahlungsleiter 20 zuzuordnen, könnte grundsätzlich ein Strahlungsleiter auch für mehrere Sensoren und/oder mehrere Strahlungsquellen genutzt werden.

Die Verstärker- und Filtereinheiten 25 sowie die Treibereinheit 21 sind mit einer Steuereinheit 27 verbunden, die mit Unterstützung eines nicht näher dargestellten Mikroprozessors eine Steuerung der gesamten Bräunungssensorvorrichtung und eine Auswertung der Messergebnisse zur Ableitung des gewünschten Bräunungsgrads übernimmt, und zwar entsprechend dem in der Druckschrift EP 0 682 243 A1 beschriebenen Auswertealgorithmus, der mit zur Lehre der vorliegenden Erfindung gehörig angesehen werden soll.

### Bezugszeichen

- 10: Sendeeinheit
- 11: Empfängereinheit
- 12: Koppeleinheit
- 13: Koppelmittel
- 14: Koppelmittel
- 15: Koppelmittel
- 16: Koppelmittel
- 17: Strahlungsquelle
- 18: Strahlungsquelle
- 19: Garraum
- 20: Strahlungsleiter
- 21: Treibereinheit
- 22: Muffel
- 23: Sensor
- 24: Sensor
- 25: Verstärker- und Filtereinheit
- 26: Gargut
- 27: Steuereinheit

## Patentansprüche

1. Bräunungssensorvorrichtung zur Ermittlung eines Bräunungsgrads eines Garguts (26), die eine Sendeeinheit (10) und eine Empfängereinheit (11) sowie eine eine Schnittstelle zu einem Garraum (19) bildende Koppeleinheit (12) aufweist, welche zumindest zwei Koppelmittel (13_{RS}, 14_{MS}, 15_{RQ}, 16_{MQ}) umfasst, wobei einer Referenzstrahlung und einer Messstrahlung jeweils zumindest ein Koppelmittel (13_{RS}, 14_{MS}, 15_{RQ}, 16_{MQ}) zugeordnet ist, **dadurch gekennzeichnet, dass** jeweils eine Referenzstrahlung und jeweils eine Messstrahlung erzeugende Strahlungsquellen (17_{RQ} , 18_{MQ}) jeweils über von Glasfaserbündeln gebildete Strahlungsleiter (20) mit den Koppelmitteln (15_{RQ}, 16_{MQ}) verbunden sind.

2. Bräunungssensorvorrichtung nach Anspruch 1, **dadurch gekennzeichnet, dass** die Sendeeinheit (10) zumindest zwei jeweils eine Referenzstrahlung erzeugende Strahlungsquellen (17_{RQ}) aufweist.

3. Bräunungssensorvorrichtung nach Anspruch 2, **dadurch gekennzeichnet, dass** zumindest zwei eine Referenzstrahlung erzeugenden Strahlungsquellen (17_{RQ}) jeweils zumindest ein Koppelmittel (15_{RQ}) zugeordnet ist.

4. Bräunungssensorvorrichtung nach einem der vorhergehenden Ansprüche, **dadurch gekennzeichnet, dass** die Sendeeinheit (10) zumindest zwei jeweils eine Messstrahlung erzeugende Strahlungsquellen (18_{MQ}) aufweist.

5. Bräunungssensorvorrichtung nach Anspruch 4, **dadurch gekennzeichnet, dass** zumindest zwei eine Messstrahlung erzeugenden Strahlungsquellen (18_{MQ}) jeweils zumindest ein Koppelmittel (16_{MQ}) zugeordnet ist.

6. Bräunungssensorvorrichtung nach einem der vorhergehenden Ansprüche, **dadurch gekennzeichnet, dass** wenigstens ein Koppelmittel (15_{RQ}, 16_{MQ}) zumindest teilweise von einer Linse gebildet ist.

7. Bräunungssensorvorrichtung nach Anspruch 6, **dadurch gekennzeichnet, das** die Linse zumindest teilweise einstückig mit dem Strahlungsleiter (20) ausgeführt ist.

8. Gargerät mit einer Bräunungssensorvorrichtung nach einem der vorhergehenden Ansprüche.

9. Gargerät nach Anspruch 8, **gekennzeichnet durch** die Ausbildung als Haushaltsgargerät.

## Claims

1. Browning sensor, for determining a degree of browning of food (26), which has a transmitting unit (10) and a receiving unit (11), as well as a coupling unit (12) forming an interface to a cooking compartment (19) and comprising at least two coupling means (13_{RS}, 14_{MS}, 15_{RQ}, 16_{MQ}), wherein at least one coupling means (13_{RS}, 14_{MS}, 15_{RQ}, 16_{MQ}) is associated with a reference radiation and a measuring radiation in each case, **characterised in that** radiation sources (17_{RQ}, 18_{MQ}) generating a reference radiation in each case and a measuring radiation in each case are in each case connected to the coupling means (15_{RQ}, 16_{MQ}) via radiation conductors (20) formed by fibre-optic bundles.

2. Browning sensor according to claim 1, **characterised in that** the transmitting unit (10) has at least two radiation sources (17_{RQ}) generating a reference radiation in each case.

3. Browning sensor according to claim 2, **characterised in that** at least one coupling means (15_{RQ}) is associated in each case with at least two radiation sources (17_{RQ}) generating a reference radiation.

4. Browning sensor according to one of the preceding claims, **characterised in that** the transmitting unit (10) has at least two radiation sources (18_{MQ}) generating a measuring radiation in each case.

5. Browning sensor according to claim 4, **characterised in that** at least one coupling means (16_{MQ}) is associated in each case with at least two radiation sources (18_{MQ}) generating a measuring radiation.

6. Browning sensor according to one of the preceding claims, **characterised in that** at least one coupling means (15_{RQ}, 16_{MQ}) is at least partially formed by a lens.

7. Browning sensor according to claim 6, **characterised in that** the lens is embodied at least partially in one piece with the radiation conductor (20).

8. Cooking appliance with a browning sensor according to one of the preceding claims.

9. Cooking appliance according to claim 8, **characterised by** the design as a household cooking appliance.

## Revendications

1. Capteur de brunissement pour la détermination d'un degré de brunissement d'un aliment à cuire (26), comportant une unité émettrice (10) et une unité réceptrice (11) ainsi qu'une unité de couplage (12) formant une interface avec une chambre de cuisson (19) et comprenant au moins deux moyens de couplage (13_{RS}, 14_{MS}, 15_{RQ}, 16_{MQ}), au moins un moyen de couplage (13_{RS}, 14_{MS}, 15_{RQ}, 16_{MQ}) étant associé à un rayonnement de référence et à un rayonnement de mesure, **caractérisé en ce que** des sources de rayonnement (17_{RQ}, 18_{MQ}) produisant un rayonnement de référence resp. un rayonnement de mesure sont reliées aux moyens de couplage (15_{RQ}, 16_{MQ}), chacune par l'intermédiaire de conducteurs de rayonnement (20) formés par des faisceaux de fibres de verre.

2. Capteur de brunissement selon la revendication 1, **caractérisé en ce que** l'unité émettrice (10) comporte au moins deux sources de rayonnement (17_{RQ}) produisant chacune un rayonnement de référence.

3. Capteur de brunissement selon la revendication 2, **caractérisé en ce qu'**au moins un moyen de couplage (15_{RQ}) est associé à au moins deux sources de rayonnement (17_{RQ}) produisant un rayonnement de référence.

4. Capteur de brunissement selon une des revendications précédentes, **caractérisé en ce que** l'unité émettrice (10) comporte au moins deux sources de rayonnement (18_{MQ}) produisant chacune un rayonnement de mesure.

5. Capteur de brunissement selon la revendication 4, **caractérisé en ce qu'**au moins un moyen de couplage (16_{MQ}) est associé à au moins deux sources de rayonnement (18_{MQ}) produisant un rayonnement de mesure.

6. Capteur de brunissement selon une des revendications précédentes, **caractérisé en ce qu'**au moins un moyen de couplage (15_{RQ}, 16_{MQ}) est formé au moins partiellement par une lentille.

7. Capteur de brunissement selon la revendication 6, **caractérisé en ce que** la lentille est au moins partiellement réalisée d'une seule pièce avec le conducteur de rayonnement (20).

8. Appareil de cuisson doté d'un capteur de brunissement selon une des revendications précédentes.

9. Appareil de cuisson selon la revendication 8, **caractérisé par** sa réalisation comme appareil de cuisson domestique.
